# EUROPÄISCHE PATENTSCHRIFT

(11) **EP 1 860 473 B1**
(45) Veröffentlichungstag und Bekanntmachung des Hinweises auf die Patenterteilung: **20.12.2017**
(21) Anmeldenummer: 07008190.6
(22) Anmeldetag: 23.04.2007
(51) Int. Cl.: G02B 6/38, H01R 13/00

(54) **Optischer Stecker mit einem in seinem Trägerteil einrastbaren und längsverschiebaren Halteteil**
Optical connector having a latchable and longitudinally movable holder in a mount part
Connecteur optique muni d'un élément de maintien verrouillable et longitudinalement déplacable dans un élément support

(30) Priorität: 24.04.2006 DE 102006019335
(43) Veröffentlichungstag der Anmeldung: 28.11.2007
(73) Patentinhaber: Telegärtner Gerätebau GmbH, 01774 Höckendorf (DE)
(72) Erfinder: Oehme, Hartmut, Dipl.-Ing., 01738 Dorfhain (DE); Schröder, Wolfgang, Dipl.-Ing. (FH), 01738 Klingenberg (DE)
(74) Vertreter: Rauschenbach, Marion

(56) Entgegenhaltungen:
- WO-A-03/012932
- DE-A1-102004 042 142
- US-A1- 2003 063 862
- US-A1- 2005 064 752

## Beschreibung

Die Erfindung betrifft einen optischen Stecker mit einem Gehäuse in dem ein Trägerteil zur Aufnahme von mindestens einem optischen Steckelement und Mittel zur Kabel- und Faserbefestigung und -zugentlastung angeordnet sind und der Funktionselemente zum Herstellen oder Lösen einer optischen Verbindung aufweist.

Lichtwellenleiter-Steckverbinder oder optische Steckverbinder sind in unterschiedlichsten konstruktiven Ausführungen bereits bekannt. Die einzelnen Stecksysteme, bestehend aus Stecker- und Buchsenteil in unterschiedlichen runden oder eckigen Bauformen sind jedoch meist nicht kompatibel mit anderen Stecksystemen. Das heißt, Stecker- oder Buchsenteile können nicht beliebig miteinander kombiniert werden. Ebenso ist es bisher nur in geringem Maße möglich, für elektrische Steckverbinder genormte Gehäuseteile auch für optische Stecksysteme einzusetzen.

Aus der Druckschrift DE 10 2004 042 142 A1 ist ein Lichtwellenleiter-Steckverbinder bekannt, dessen zu lösende Aufgabe unter anderem darin bestand, einen optischen Steckverbinder möglichst kleiner Bauform zu entwickeln. Die Steckeraufnahme des Steckerteils ist nach dem Ausführungsbeispiel zur Lösung derart ausgebildet, dass wenigstens zwei Steckelemente genormter SC-Stecker eingesetzt werden können. Die Steckeraufnahme kann aber ebenso der Aufnahme elektrischer Steckkontakte oder in Kombination beider dienen.

Nachteilig ist, dass außer dem Einsatz genormter optischer und elektrischer Steckelemente die Gehäuse oder Verbindungsteile mit anderen üblichen optischen oder elektrischen Verbindungssystemen nicht kompatibel sind. Lediglich bei den Steckelementen können bereits bekannte und übliche Teile kostengünstig eingesetzt werden. Außerdem gestaltet sich die Montage des Steckers schwierig, da die Steckelemente in der Steckeraufnahme seitlich verrutschen können, weil sie in ihrer Position nicht ausreichend fixiert werden können, da die Steckelemente zum Anschluss der optischen Fasern zugänglich sein müssen.

Die Druckschrift US 2003/0063862 A1 offenbart einen optischen Stecker mit einem Gehäuse und einem Doppel-Steckersockel, welcher zur Aufnahme von zwei LC-Steckern ausgebildet ist. Der Doppel-Steckersockel weist einen Entriegelungs- oder Freigabeverschluss auf, durch welchen die in den Doppel-Steckersockel eingeführten LC-Stecker fixiert werden, in dem dieser in die Auslösearme der LC-Stecker eingreift. Der Entriegelungs- oder Freigabeverschluss ist am Doppel-Steckersockel drehbar gelagert und wird zum Lösen einer Steckverbindung des Steckers in eine Freigabeposition gedreht, bei der die Auslösearme der LC-Stecker niedergedrückt werden.

Die Montage dieses Steckers gestaltet sich ebenfalls schwierig, da die optischen Steckelemente in ihrer Position nicht ausreichend, insbesondere nicht seitlich fixiert werden. Außerdem ist dieser Stecker nicht kompatibel für die Montage verschiedener genormter, optischer Steckelemente ausgebildet.

Es ist deshalb Aufgabe der Erfindung, einen optischen Stecker der eingangs genannten Art so weiterzubilden, dass er zum Bestücken mit optischen, genormten Steckelementen geeignet ist, die in bekannte Steckergehäuse zur Herstellung elektrischer Verbindungen einsetzbar sind und deren Montage einfach und positionsgenau erfolgen kann.

Die erfindungsgemäße Aufgabe wird dadurch gelöst, dass zur seitlichen Halterung und Positionierung des mindestens einen optischen Steckelementes im Trägerteil am steckseitigen Ende des Trägerteils ein rast- und längsverschiebbar ausgebildetes Halteteil angeordnet ist.

Mit dem erfindungsgemäßen Halteteil wird eine einfache Montage des oder der Steckelemente dadurch erreicht, dass die Steckelemente im Trägerteil sowohl in Längsachsrichtung als auch quer dazu positioniert und in ihrer Position gehalten werden können.

Die Steckelemente können als übliche LC-Kontakte ausgebildet sein, die in ein Trägerelement eingesetzt werden, wie es beispielsweise aus der DE 10 2004 042 142 A1 bereits bekannt ist.

Nach einer vorzugsweisen Ausbildung des erfindungsgemäßen Halteteils ist die äußere Form des Halteteils der des Trägerteils angepasst und das Halteteil weist eine U-profilartige Form auf, wobei dessen Seitenflächen teilweise horizontal und vertikal seitliche Öffnungen im Trägerteil überdecken.

Dadurch, dass das Halteteil nur unwesentlich den Umfang des Trägerteils überragt, sind beide Teile unabhängig von der Form der Gehäuseteile des Steckers einsetzbar. Sie können auch mit bekannten, genormten Buchsenteilen verschiedener Hersteller verbunden werden, da die Steckelemente ebenfalls genormte Teile sind.

Eine vorteilhafte Ausbildung des erfindungsgemäßen optischen Steckers sieht vor, dass am Trägerteil ein Kabelzugentlastungselement angeformt ist, welches über seine Länge nutförmige Aussparungen zum Durchführen der optischen Fasern zum Steckelement aufweist.

Damit können die Fasern auf einfache Art mit den Steckelementen konfektioniert werden. Die Kabelzugentlastung und Befestigung des optischen Kabels erfolgt durch eine Crimpverbindung zwischen den Zugentlastungselementen des Kabels (z.B. Kevlar) und dem Kabelzugentlastungselement des Trägerteils. Die sekundär geschützten Adern des Kabels werden in den nutförmigen Aussparungen geführt und so vor Beschädigungen geschützt.

Nach einer weiteren vorteilhaften und vorzugsweisen Ausbildung der erfindungsgemäßen Lösung sind im Trägerkörper und/oder am Halteteil Führungs- und Rastelemente ausgebildet, derart, dass das Halteteil zum Verrasten mit dem Trägerteil horizontal in Richtung der Längsachse des Trägerteils verschoben werden kann.

Dabei ist im Halteteil wenigstens ein Vorsprung ausgebildet, der übliche, an optischen Steckelementen vorhandene federnde Rasthebel, die dem Verrasten im Buchsenteil dienen, im Trägerteil gegen das Steckelement drückt und somit die Rastfunktion außer Kraft setzt.

Aufgrund der konstruktiven Ausbildung des optischen Steckers ist das Einrasten der Rasthebel im Buchsenteil nicht vorgesehen und würde dazu führen, dass ein Lösen der Verbindung nicht mehr möglich ist. Da es jedoch Aufgabenstellung war, möglichst viele genormte Steckerteile einzusetzen, um kostengünstige und montagefreundliche optische Stecker in variablen Ausführungen anbieten zu können, war es erfindungsgemäß notwendig, Möglichkeiten zu schaffen, um trotz der konstruktiven Gegebenheiten die Steckelemente in der Form einzusetzen, wie sie üblicherweise hergestellt werden.

Das horizontale Verschieben des Halteteils auf dem Trägerteil ermöglicht das sichere Verriegeln der Rasthebel der Steckelemente.

Die Erfindung soll nachfolgend anhand eines Ausführungsbeispieles näher erläutert werden. Die zugehörige Zeichnung zeigt dabei in
- Fig. 1: den erfindungsgemäßen Stecker mit rechteckiger, elektrischer Gehäuseform,
- Fig. 2: den erfindungsgemäßen optischen Stecker in runder Gehäuseausführung,
- Fig. 3: den Stecker in Explosivdarstellung ohne Gehäuseteile,
- Fig. 4: die Steckerteile nach Fig. 3 im montierten Zustand,
- Fig. 5: eine Seitenansicht nach Fig. 4 und
- Fig. 6: eine Schnittdarstellung nach Fig. 5.

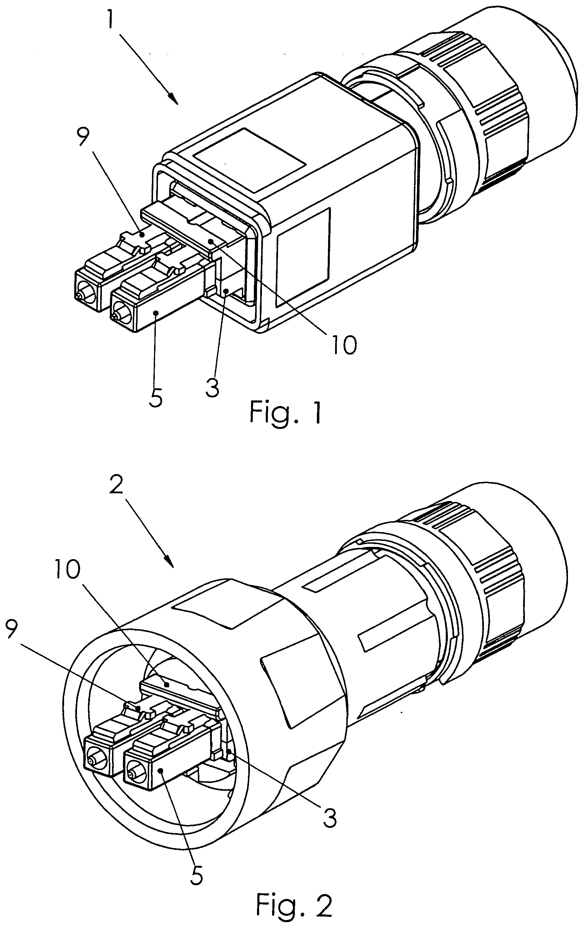

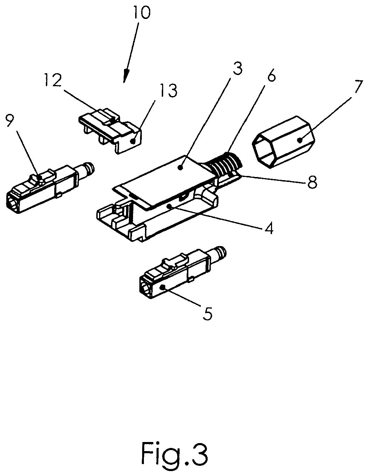

Nach den Fig. 1 und 2 besteht der optische Stecker aus runden oder rechteckigen Gehäuse- und Kabelanschlussteilen 1, 2, wie sie als genormte Teile bei elektrischen Steckverbindern bekannt sind. Fig. 3 veranschaulicht die wesentlichen Teile des inneren Aufbaus eines optischen Steckers, die zumindest teilweise auch in den Fig. 1 und 2 erkennbar sind. Im Inneren des Gehäuses ist das Trägerteil 3 angeordnet, das zwei Aufnahmen 4 für optische Steckelemente 5 und das Kabelzugentlastungselement 6 aufweist. Mittels Crimphülse 7 wird das Lichtwelnicht dargestellt) am optischen Stecker angeschlossen, wobei die Fasern durch nutförmige Aussparungen 8 im Kabelzugentlastungselement 6 in die Aufnahmen 4 des Steckelementes 5 geführt und dort mit den Steckelementen 5 verbunden werden. Um die Steckelemente 5 in den Aufnahmen 4 in Richtung der Längsachse zu haltern, sind Rastelemente an den Steckelementen 5 und im Trägerteil 3 vorgesehen. Die Aufnahmen 4 sind zur Verlegung der optischen Faser seitlich offen.

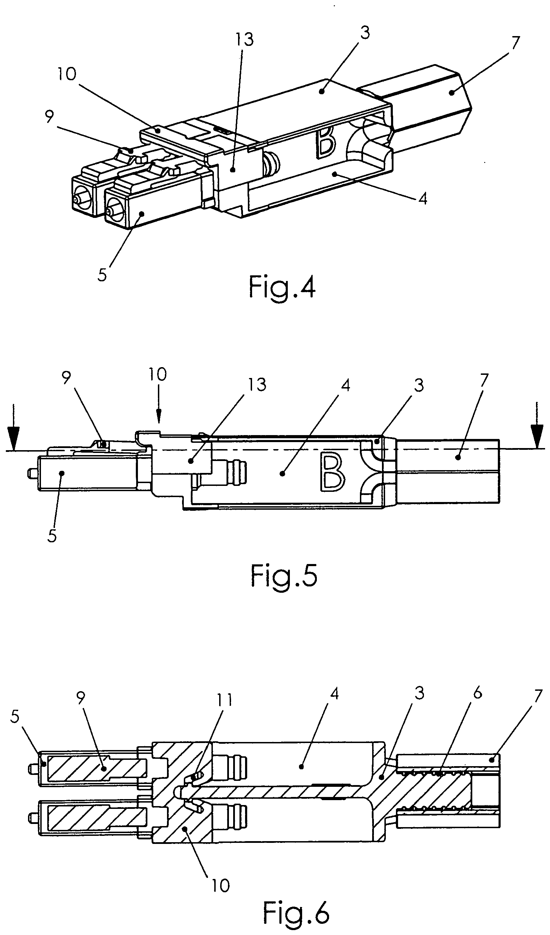

Die Steckelemente 5 sind im Ausführungsbeispiel als bekannte LC-Steckkontakte ausgebildet, so dass deren Aufbau nicht näher erläutert werden muss. Wesentlich ist, dass die Steckelemente standardmäßig einen Rasthebel 9 aufweisen, der jedoch bei dem erfindungsgemäßen optischen Stecker funktionslos bleiben muss. Üblicherweise dient er dazu, im Buchsenteil (in der Zeichnung nicht dargestellt) zur Verbindungsherstellung zu verrasten. Aufgrund des konstruktiven Aufbaus des optischen Steckers ist es nicht möglich, den Rasthebel 9 beim Lösen der Verbindung zu entriegeln. Erfindungsgemäß ist daher ein Halteteil 10 vorgesehen, dass in seiner äußeren Form der des Trägerteils 3 angepasst und mit diesem längsverschiebbar verrastet ist. Dafür sind Rastelemente 11,12 an beiden Teilen vorgesehen. Die nutförmigen Aussparungen 12 im Halteteil 10 gestatten ein horizontales Verschieben des Halteteils 10 nach Befestigung auf dem Trägerteil 3 über eine vorgegebene Länge. Damit wird erreicht, dass beim steckelementseitigen Befestigen des Halteteils 10 auf dem Trägerteil 3 die Rasthebel 9 gegen die Steckelemente 5 gedrückt und somit deaktiviert werden. Die Fig. 4 bis 6 zeigen den optischen Stecker ohne Gehäuse und ohne optisches Kabel im montierten Zustand.

Das Halteteil 10 dient des Weiteren der Halterung und Positionierung der Steckelemente 5. Es weist eine im Wesentlichen U-profilartige Form auf, dessen Seitenflächen 13 teilweise die Öffnungen der Aufnahmen 4 in horizontaler und vertikaler Richtung abdecken. Damit wird ein seitliches Verrutschen der Steckelemente 5 während der Montage des Steckers verhindert, die Steckelemente 5 werden in ihrer Position nach dem Einlegen in die Öffnungen des Trägerteil 3, dem steckelementseitigem Aufsetzen des Halteteils 10, Verrasten mit diesem und Verschieben in Richtung Trägerteil 3, arretiert und in ihrer Endlage gesichert. Somit wird die Montage wesentlich erleichtert und zeitsparender gestaltet.

Nach Anschluss der optischen Fasern wird das Trägerteil 3 im Gehäuse 1 oder 2 befestigt, das je nach Ausführung entweder eine runde oder eine eckige Form aufweist.

### Bezugszeichenliste

- 1: Gehäuse in eckiger Form
- 2: Gehäuse in runder Form
- 3: Trägerteil
- 4: Aufnahme
- 5: Steckelement
- 6: Kabelzugentlastungselement
- 7: Crimphülse
- 8: nutförmige Aussparung
- 9: Rasthebel
- 10: Halteteil
- 11: Rastelemente
- 12: nutförmige Aussparung
- 13: Seitenflächen

## Patentansprüche

1. Optischer Stecker mit einem Gehäuse (1) in dem ein Trägerteil (3) zur Aufnahme von mindestens einem optischen Steckelement (5) und Mittel zur Kabel- und Faserbefestigung und - zugentlastung angeordnet sind und der Funktionselemente zum Herstellen oder Lösen einer optischen Verbindung aufweist, **dadurch gekennzeichnet, dass** zur seitlichen Halterung und Positionierung des mindestens einen Steckelementes (5) im Trägerteil (3) am steckseitigen Ende des Trägerteils (3) ein Halteteil (10) angeordnet ist, das mit dem Trägerteil längsverschiebbar verrastet ist.

2. Optischer Stecker nach Anspruch 1, **dadurch gekennzeichnet, dass** die äußere Form des Halteteils (10) der des Trägerteils (3) angepasst ist und das Halteteil (10) eine U-profilartige Form aufweist, wobei dessen Seitenflächen (13) teilweise horizontal und vertikal seitliche Öffnungen im Trägerteil (3) überdecken.

3. Optischer Stecker nach Anspruch 1 und 2, **dadurch gekennzeichnet, dass** am Trägerteil ein Kabelzugentlastungselement (6) angeformt ist, welches über seine Länge nutförmige Aussparungen (8) zum Durchführen der optischen Fasern zum Steckelement (5) aufweist.

4. Optischer Stecker nach Anspruch 1 und wenigstens einem der Ansprüche 2 und 3, **dadurch gekennzeichnet, dass** im Trägerkörper (3) und am Halteteil (10) Führungs- und Rastelemente (11, 12) ausgebildet sind, derart, dass das Halteteil (10) zum Verrasten mit dem Trägerteil (3) horizontal in Richtung der Längsachse des Trägerteils (3) verschoben werden kann.

5. Optischer Stecker nach Anspruch 1 und wenigstens einem der Ansprüche 2 bis 4, **dadurch gekennzeichnet, dass** im Halteteil (10) wenigstens ein Vorsprung ausgebildet ist, der übliche, an optischen Steckelementen (5) vorhandene federnd ausgebildete Rasthebel (9) im Trägerteil (3) gegen das Steckelement (5) drückt.

## Claims

1. Optical plug having a housing (1) in which a carrier part (3) for accommodating at least one optical plug element (5) and means for cable and fibre fastening and strain relief are arranged and which has functional elements for establishing or releasing an optical connection, **characterized in that** a holding part (10), which is latched to the carrier part in a longitudinally displaceable manner, is arranged at the plug-side end of the carrier part (3) for the purpose of laterally holding and positioning the at least one plug element (5) in the carrier part (3).

2. Optical plug according to Claim 1, **characterized in that** the outer shape of the holding part (10) is matched to that of the carrier part (3), and the holding part (10) has a U-profile-like shape, wherein the side faces (13) of the said holding part partially horizontally and vertically overlap lateral openings in the carrier part (3).

3. Optical plug according to Claims 1 and 2, **characterized in that** a cable strain relief element (6) is integrally formed on the carrier part, which cable strain relief element has, over its length, slot-like cutouts (8) for leading the optical fibres through to the plug element (5).

4. Optical plug according to Claim 1 and at least one of Claims 2 and 3, **characterized in that** guide and latching elements (11, 12) are formed in the carrier body (3) and on the holding part (10) in such a way that the holding part (10) can be displaced horizontally in the direction of the longitudinal axis of the carrier part (3) for the purpose of latching to the carrier part (3).

5. Optical plug according to Claim 1 and at least one of Claims 2 to 4, **characterized in that** at least one projection is formed in the holding part (10), which projection presses customary latching levers (9) which are present on optical plug elements (5) and are of resilient design against the plug element (5) in the carrier part (3).

## Revendications

1. Connecteur optique comportant un boîtier (1) dans lequel sont disposés une partie de support (3) destinée à recevoir au moins un élément de connexion optique (5) et des moyens pour la fixation de câbles et de fibres et pour le soulagement de traction et qui comporte des éléments fonctionnels pour l'établissement ou l'interruption d'une liaison optique, **caractérisé en ce que**, pour le maintien et le positionnement latéral de l'au moins un élément de connexion (5) dans la partie de support (3), il est prévu à l'extrémité côté connecteur de la partie de support (3) une partie de retenue (10) qui est enclenchée sur la partie de support de manière à coulisser longitudinalement.

2. Connecteur optique selon la revendication 1, **caractérisé en ce que** la forme extérieure de la partie de retenue (10) est adaptée à celle de la partie de support (3) et **en ce que** la partie de retenue (10) présente une forme profilée en U, dans lequel les surfaces latérales (13) de cette dernière recouvrent partiellement horizontalement et verticalement des ouvertures latérales présentes dans la partie de support (3).

3. Connecteur optique selon les revendications 1 et 2, **caractérisé en ce qu'**un élément de soulagement de traction du câble (6) est moulé sur la partie de support, lequel élément comporte sur sa longueur des évidements (8) en forme de rainures permettant de faire passer les fibres optiques vers l'élément de connexion (5).

4. Connecteur optique selon la revendication 1 et au moins l'une des revendications 2 et 3, **caractérisé en ce que** des éléments de guidage et d'encliquetage (11, 12) sont réalisés dans le corps de support (3) et sur la partie de retenue (10), de manière à ce que la partie de retenue (10) puisse être décalée horizontalement dans la direction de l'axe longitudinal de la partie de support (3) pour s'enclencher sur la partie de support (3).

5. Connecteur optique selon la revendication 1 et au moins l'une des revendications 2 à 4, **caractérisé en ce qu'**au moins une protubérance est réalisée dans la partie de retenue (10), laquelle protubérance comprime des leviers d'encliquetage (9) classiques réalisés de manière élastique et présents sur des éléments de connexion optiques (5), contre l'élément de connexion (5) dans la partie de support (3).
